# EUROPEAN PATENT APPLICATION

(11) **EP 4 376 148 A2**
(43) Date of publication of application: **29.05.2024**
(21) Application number: 23195649.1
(22) Date of filing: 06.09.2023
(51) Int. Cl.: H01M 10/0525, H01M 50/103, H01M 50/15, H01M 50/176, H01M 50/528, H01M 50/536, H01M 50/548, H01M 50/553, H01M 50/566, H01M 50/586

(54) **SECONDARY BATTERY**

(30) Priority: 22.11.2022 KR 20220157142
(71) Applicant: Samsung SDI Co., Ltd., Yongin-si, Gyeonggi-do 17084 (KR)
(72) Inventor: Lee, Jun Hyung, 17084 Yongin-si, Gyeonggi-do (KR); Yong, Jun Sun, 17084 Yongin-si, Gyeonggi-do (KR); Bae, Kwang Soo, 17084 Yongin-si, Gyeonggi-do (KR)
(74) Representative: Gulde & Partner

(57) **Abstract**

A secondary battery includes: an electrode assembly including a first electrode tab protruding from one side thereof and a second electrode tab protruding from another side thereof; a case accommodating the electrode assembly; a first cap assembly including a first cap plate coupled to one side of the case, a first electrode terminal extending through the first cap plate, and a gasket between the first cap plate and the first electrode terminal; a first current collector plate including a tab connecting part and a terminal connector part protruding from the tab connecting part, the tab connecting part being electrically connected to the first electrode tab, the terminal connector part being electrically connected to the first electrode terminal; and a support member between the first cap plate and the first current collector plate.

## Description

### BACKGROUND

### 1. Field

Aspects of embodiments of the present disclosure relate to a secondary battery.

### 2. Description of the Related Art

A secondary battery is a power storage system that provides excellent energy density by converting electrical energy into chemical energy and storing the same. Compared to non-rechargeable (or primary) batteries, rechargeable (or secondary) batteries are designed to be recharged and are widely used in IT devices, such as smart phones, cellular phones, notebooks, and tablet PCs. Recently, interest in electric vehicles has increased to reduce environmental pollution, and high-capacity secondary batteries are being adopted for use in electric vehicles. Such secondary batteries have high density, high power, and good stability.

A secondary battery may be manufactured by inserting an electrode assembly into a case, arranging an insulating member on the electrode assembly, and assembling a cap assembly with the case.

The above information disclosed in this Background section is for enhancement of understanding of the background of the present disclosure, and therefore, it may contain information that does not constitute prior art.

### SUMMARY

An object of the present invention is to provide a secondary battery that facilitates welding between a current collector plate and an electrode terminal while preventing deformation of the current collector plate.

A secondary battery, according to the present invention, includes: an electrode assembly including a first electrode tab protruding from one side thereof and a second electrode tab protruding from another side thereof; a case accommodating the electrode assembly; a first cap assembly including a first cap plate coupled to one side of the case, a first electrode terminal extending through the first cap plate, and a gasket between the first cap plate and the first electrode terminal; a first current collector plate including a tab connecting part and a terminal connector part protruding from the tab connecting part, the tab connecting part being electrically connected to the first electrode tab, the terminal connector part being electrically connected to the first electrode terminal; and a support member between the first cap plate and the first current collector plate.

The support member may be inserted and coupled from a front surface or a rear surface of the first current collector plate.

The support member may include: an internal support part between the electrode assembly and the terminal connector part; an external support part between the tab connecting part and the first cap plate; and a connecting part connecting the internal support part and the external support part.

The internal support part may have an internal bottom surface in contact with the electrode assembly and a plurality of partition walls protruding from the internal bottom surface and in contact with the terminal connector part.

The external support part may have an external bottom surface contacting the tab connecting part and a sidewall protruding from an edge of the external bottom surface and contacting the first cap plate.

The external bottom surface may have a plurality of holes therein.

The internal support part and the external support part may be spaced apart from each other.

The support member may include: a first support member inserted from a rear surface of the first current collector plate; and a second support member inserted from a front surface of the first current collector plate and coupled to the first support member.

The first support member may include: a first internal support part between the electrode assembly and the terminal connector part; a first external support part between the tab connecting part and the first cap plate; and a first connecting part connecting the first internal support part and the first external support part. The second support member may include: a second internal support part between the electrode assembly and the terminal connector part; a second external support part between the tab connecting part and the first cap plate; and a second connecting part connecting the second internal support part and the second external support part.

The first internal support part may include a hook, and the second internal support part may have a coupling groove configured to receive the hook.

The support member may be between the electrode assembly and the terminal connector part. The support member may have a bottom surface in contact with the electrode assembly and a plurality of partition walls protruding from the bottom surface and in contact with the terminal connector part.

The support member may include: a first support member inserted from a rear surface of the first current collector plate; and a second support member inserted from a front surface of the first current collector plate and coupled to the first support member.

The first support member may have a first bottom surface in contact with the electrode assembly and a plurality of first partition walls protruding from the bottom surface and in contact with the terminal connector part. The second support member may have a first bottom surface in contact with the electrode assembly and a plurality of second partition walls protruding from the first bottom surface and in contact with the terminal connector part.

The first partition walls may include hooks, and the second partition walls may have coupling grooves configured to receive the hooks.

The secondary battery may further include: a second cap assembly including a second cap plate coupled to another side of the case, a second electrode terminal passing through the second cap plate, and a gasket between the second cap plate and the second electrode terminal; a second current collector plate including a tab connecting part and a terminal connector part protruding from the tab connecting part, the tab connecting part being electrically connected to the second electrode tab, the terminal connector part being electrically connected to the second electrode terminal; and a support member between the second cap plate and the second current collector plate.

### BRIEF DESCRIPTION OF DRAWINGS

FIG. 1 is a perspective view of a secondary battery according to an embodiment of the present disclosure.
FIG. 2 is a cross-sectional view taken along the line A-A of FIG. 1.
FIG. 3 is a partial cross-sectional view taken the along line B-B of FIG. 1.
FIG. 4 is an exploded perspective view of a support member and a first current collector plate shown in FIG. 3.
FIG. 5A is a perspective view of a support member according to another embodiment of the present disclosure.
FIG. 5B is a plane view of the support member shown in FIG. 5A.
FIG. 5C is an exploded perspective view of the support member and a first current collector plate shown in FIG. 5A.
FIG. 6 is a cross-sectional view of a part of a secondary battery including a support member according to another embodiment of the present disclosure.
FIG. 7A is a perspective view of a support member according to another embodiment of the present disclosure.
FIG. 7B is a plane view of the support member shown in FIG. 7A.
FIG. 7C is an exploded perspective view of the support member and a first current collector plate shown in FIG. 7A.

### DETAILED DESCRIPTION

The present invention is set out in the appended set of claims, wherein the drawings and respective description relate to advantageous embodiments thereof. Hereinafter, embodiments of the present disclosure will be described, in detail, with reference to the accompanying drawings.

Embodiments of the present disclosure are provided to more completely explain aspects and features of the present disclosure to those skilled in the art, and the following embodiments may be modified in various other forms. The present disclosure, however, may be embodied in many different forms and should not be construed as being limited to the embodiments set forth herein. Rather, these embodiments are provided so that this disclosure will be thorough and complete and will convey the aspects and features of the present disclosure to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

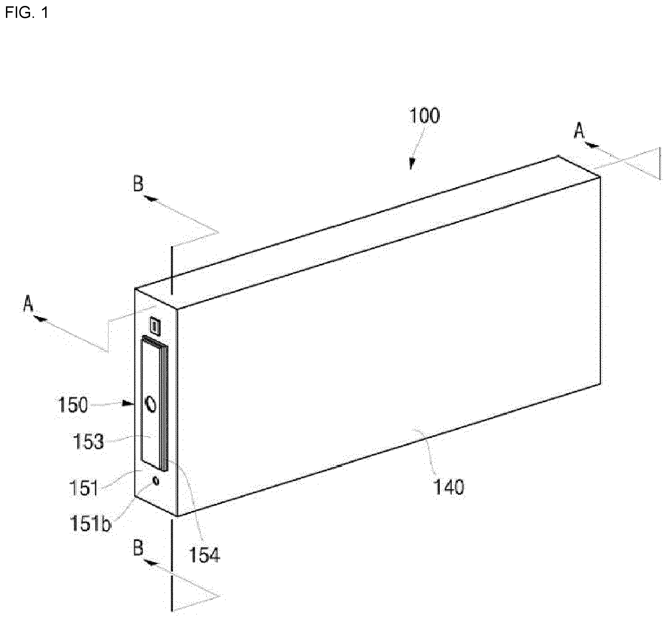

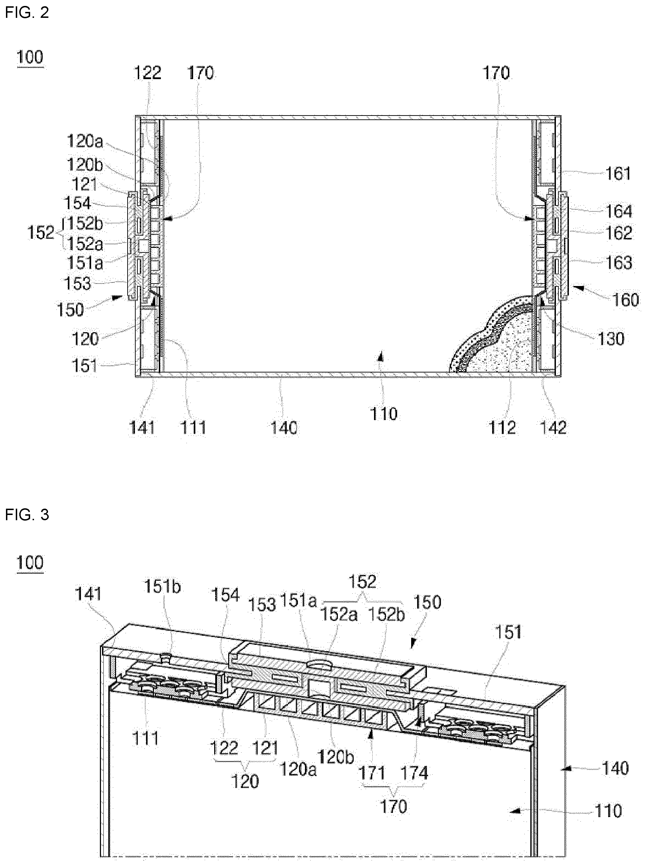

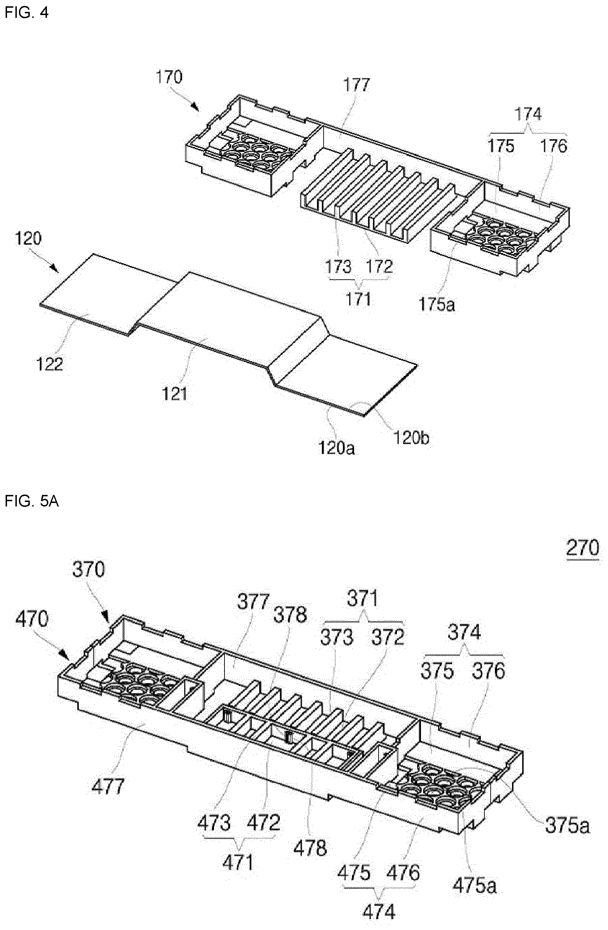

FIG. 1 is a perspective view of a secondary battery according to an embodiment of the present disclosure. FIG. 2 is a cross-sectional view taken along the line A-A of FIG. 1. FIG. 3 is a partial cross-sectional view taken along the line BB of FIG. 1. FIG. 4 is an exploded perspective view of a support member and a first current collector plate shown in FIG. 3.

Referring to 1 to 3, a secondary battery 100, according to an embodiment of the present disclosure, includes an electrode assembly 110, a first current collector plate 120, a second current collector plate 130, a case 140, a first cap assembly 150, a second cap assembly 160, and a support member 170.

The electrode assembly 110 may be formed by winding or stacking (e.g., overlapping) a stack of a first electrode plate, a separator, and a second electrode plate, which are formed in a thin plate shape or film shape. When the electrode assembly 110 is a wound stack, the winding axis may be parallel to the longitudinal direction of the case 140 (e.g., a direction substantially parallel to the longitudinal direction of the first cap assembly 150 and the second cap assembly 160). In addition, the electrode assembly 110 may be a stacked type rather than a wound type, and the shape of the electrode assembly 110 is not limited in the present disclosure. The first electrode plate of the electrode assembly 110 may act as a negative electrode, and the second electrode plate may act as a positive electrode. However, the polarity of the first and second electrode plates may be reversed.

The first electrode plate may be formed by applying a first electrode active material, such as graphite or carbon, to a first electrode current collector formed of a metal foil, such as copper, a copper alloy, nickel, or a nickel alloy, and may have a first electrode uncoated portion, which is a region to which the first electrode active material is not applied, but the present disclosure is not limited thereto. The first electrode uncoated portion may be referred to as the first current collector tab 111. In some embodiments, the first electrode uncoated portion may be provided by being cut (e.g., by cutting the first electrode plate) to protrude to one side when the first electrode plate is manufactured and may be integrally formed with the first electrode plate. In some embodiments, two or more first electrode uncoated portions may protrude in a lateral direction of the electrode assembly. In some embodiments, the first electrode uncoated portion may be provided at upper and lower portions of the electrode assembly 110.

The second electrode plate may be formed by applying a second electrode active material, such as a transition metal oxide, to a second electrode current collector formed of a metal foil, such as aluminum or aluminum alloy, and may have a second electrode uncoated portion, which is a region to which the second electrode active material is not applied, but the present disclosure is not limited thereto. The second electrode uncoated portion may be referred to as the second current collector tab 112. In some embodiments, the second electrode uncoated portion may be provided by being cut (e.g., by cutting the second electrode plate) to protrude to the lateral side when the second electrode plate is manufactured and may be integrally formed with the second electrode plate. In some embodiments, approximately two second electrode uncoated portions may protrude in a lateral direction of the electrode assembly 110. In some embodiments, the second electrode uncoated portion may be provided at upper and lower portions of the electrode assembly 110. In some embodiments, the protruding direction of the first electrode uncoated portion and the protruding direction of the second electrode uncoated portion may be opposite to each other.

In some embodiments, the first current collector tab 111 may be positioned on the left side surface of the electrode assembly 110, and the second current collector tab 112 may be positioned on the right side surface of the electrode assembly 110. Herein, the left and right sides are referred to for convenience of explanation on the basis of the secondary battery 100 as shown in FIG. 1. Accordingly, the left and right positions would change, and should be interpreted accordingly, when the secondary battery 100 is rotated left and right or up and down.

The separator is positioned between the first electrode plate and the second electrode plate to prevent a short circuit therebetween while enabling the movement of lithium ions. The separator may include polyethylene, polypropylene, or a composite film of polyethylene and polypropylene. In some embodiments, the separator may be omitted in place of an inorganic solid electrolyte, such as a sulfide, oxide, or phosphate compound that does not require a liquid or gel electrolyte, but the present disclosure is not limited thereto.

In some embodiments, the electrode assembly 110 may be accommodated in the case 140 together with an electrolyte. In some embodiments, the electrolyte may include a lithium salt, such as LiPF₆ or LiBF₄, in an organic solvent, such as ethylene carbonate (EC), propylene carbonate (PC), diethyl carbonate (DEC), ethyl methyl carbonate (EMC), or dimethyl carbonate (DMC), but the present disclosure is not limited thereto. The electrolyte may be in a liquid or gel state. In some embodiments, when an inorganic solid electrolyte is used, the (gel or liquid) electrolyte may be omitted.

The first current collector plate 120 may be electrically connected to the first current collector tab 111 of the electrode assembly 110. In some embodiments, the first current collector plate 120 may be in contact with the first current collector tab 111, which protrudes to one side of the electrode assembly 110 and, in this state, may be coupled thereto by welding. For example, the first current collector plate 120 electrically connected to the first current collector tab 111 may have a negative polarity.

The first current collector plate 120 is formed of metal and may have a first surface (e.g., an inner surface) 120a facing the electrode assembly 110 and a second surface (e.g., an outer surface) 120b opposite to the first surface 120a and facing the first cap assembly 150. The first current collector plate 120 may have a terminal connector part 121 to which the first electrode terminal 152 is electrically connected and a tab connecting part 122 to which the first current collector tab 111 is coupled. The first current collector tab 111 may be in contact with and connected to the first surface 120a of the first current collector plate 120 by welding, and a first electrode terminal 152 may be in contact with and coupled to the second surface 120b of the first current collector plate 120.

The terminal connector part 121 is located in the center of the first current collector plate 120 and may protrude from the tab connecting part 122. For example, the terminal connector part 121 may protrude toward the first cap plate 151. Accordingly, a step (e.g., a height difference) may be formed between the terminal connector part 121 and the tab connecting part 122. The first electrode terminal 152 may be electrically connected to the terminal connector part 121.

The tab connecting part 122 may be located on the top and bottom (e.g., may be located on both sides) of the terminal connector part 121. The first current collector tab 111, which protrudes to one side of the electrode assembly 110, may be electrically connected to the tab connecting part 122 by welding.

The second current collector plate 130 may be electrically connected to the second current collector tab 112 of the electrode assembly 110. In some embodiments, the second current collector plate 130 may be in contact with the second current collector tab 112 protruding to the other side of the electrode assembly 110 and, in this state, may be coupled thereto by welding. For example, the second current collector plate 130 electrically connected to the second current collector tab 112 may have a positive polarity. Because the shape of the second current collector plate 130 is the same as that of the first current collector plate 120, duplicate descriptions therebetween may be omitted.

The case 140 may have a substantially rectangular parallelepiped shape having openings 141 and 142 at both sides thereof. The electrode assembly 110, coupled to the first current collector plate 120 and the second current collector plate 130, may be inserted into the case 140 through one or both of the openings 141 and 142.

The case 140 may have rectangular upper and lower surfaces extending along the longitudinal direction and two rectangular long side surfaces connecting (or extending between) the long sides of the upper and lower surfaces and extending along the longitudinal direction. The case 140 may have an upper surface, a lower surface, and two long side surfaces extending therebetween. In some embodiments, the case 140 may have a vent hole (e.g., a vent opening) penetrating the upper or lower surface, and a safety vent may be installed in the vent hole.

The first cap assembly 150 may be coupled at the left opening (or first opening) 141 in the case 140. The first cap assembly 150 may include a first cap plate 151, a first electrode terminal 152, a first terminal plate 153, and a first gasket 154.

The first cap plate 151 has a flat rectangular plate shape and may seal the left opening 141 in the case 140. The first cap plate 151 may have a terminal hole (e.g., a terminal opening) 151a penetrating (or extending between) between an outer surface and an inner surface. An electrolyte injection hole (or opening) 151b, into which electrolyte is injected, may be formed at one side of the first cap plate 151. The electrolyte injection hole 151b may be sealed with a plug after the electrolyte is injected.

The first electrode terminal 152 is made of metal and may be in contact with and coupled to the first current collector plate 120. The first electrode terminal 152 may include a protrusion part 152a coupled at the terminal hole 151a in the first cap plate 151 and a flange part 152b coupled to the terminal connector part 121. The protrusion part 152a may penetrate the first cap plate 151 and protrude outwardly from the first cap plate 151. The flange part 152b is located inside the case 140 and may be electrically connected to the terminal connector part 121 by welding. In some embodiments, the flange part 152b may be electrically connected to and sandwiched between the first cap plate 151 and the terminal connector part 121 without separate welding. An area (e.g., surface area) of the flange part 152b may be equal to or larger than that of the terminal connector part 121.

The first terminal plate 153 may be coupled to the protrusion part 152a. For example, the first terminal plate 153 may be electrically connected to the upper surface of the protrusion part 152a by welding.

The first gasket 154 may be inserted into the terminal hole 151a in the first cap plate 151 and may extend to the inner and outer surfaces of the first cap plate 151. Thus, the first gasket 154 may insulate the first electrode terminal 152 and the first cap plate 151 from each other and the first terminal plate 153 and the first cap plate 151 from each other.

The second cap assembly 160 may be coupled to the right opening (or second opening) 142 in the case 140. The second cap assembly 160 may include a second cap plate 161, a second electrode terminal 162, a second terminal plate 163, and a second gasket 164. The second cap assembly 160 has the same shape and structure as the first cap assembly 150, except that the second electrode terminal 162 is electrically connected to the second current collector plate 130, thus, duplicate descriptions therebetween are omitted.

A support member 170 may be interposed between the first current collector plate 120 and the first cap assembly 150, and a support member 170 may be interposed between the second current collector plate 130 and the second cap assembly 160. One support member 170 may support the first current collector plate 120 and the second current collector plate 130, respectively. The support member 170 is made of an insulating material and, thus, may prevent short circuits between the first current collector plate 120 and the first cap assembly 150 and between the second current collector plate 130 and the second cap assembly 160. Hereinafter, the support member 170 positioned between the first current collector plate 120 and the first cap assembly 150 will be primarily described.

Referring to FIG. 4, the support member 170 may include an internal support part 171 interposed between the terminal connector part 121 and the electrode assembly 110, an external support part 174 located between the tab connecting part 122 and the first cap assembly 150, and a connecting part 177 connecting the internal support part 171 and the external support part 174. The support member 170 may be inserted and coupled in a sliding manner (e.g., slidably coupled) between the first current collector plate 120 and the electrode assembly 110 coupled thereto. For example, the support member 170 may be inserted from the front to the rear of the electrode assembly 110 or from the back to the front of the electrode assembly 110.

The internal support part 171 may have an internal bottom surface 172 in contact with the electrode assembly 110 and a plurality of partition walls 173 protruding from (e.g., protruding upwardly from) the internal bottom surface 172 and in contact with the terminal connector part 121. The height of the partition walls 173 may be the same as the step (e.g., the height difference) between the tab connecting part 122 and the terminal connector part 121. The partition walls 173 are spaced at regular intervals on (or along) the internal bottom surface 172 and are formed in a plurality to stably support the first current collector plate 120. A reaction force applied against a force applied during welding of the first electrode terminal 152 and the first terminal plate 153 may act on the internal support part 171, thereby preventing the first current collector plate 120 located under the first electrode terminal 152 from being deformed. The internal support part 171 enables welding of the first electrode terminal 152 and the first terminal plate 153 from the outside of the first cap assembly 150.

Referring to FIG. 4, the external support part 174 may be located on both sides of the internal support part 171 (e.g., upper and lower parts based on the orientation in FIG. 2). The external support part 174 may be interposed between the tab connecting part 122 and the first cap plate 151 to support the first cap plate 151. In addition, the external support part 174 may be located apart from (e.g., may be spaced apart from) the internal support part 171. The external support part 174 may have an external bottom surface 175 and a sidewall 176 protruding from (or along) an edge of the external bottom surface 175. The external bottom surface 175 may be in contact with the tab connecting part 122 and may have a plurality of holes 175a through which the electrolyte can move. One end of the sidewall 176 may be in contact with the tab connecting part 122 and the other end may be in contact with the first cap plate 151.

The connecting part 177 may connect the internal support part 171 and the external support part 174 to each other. The connecting part 177 may be connected to one end of the internal support part 171 and may connect sidewalls 176 of the external support part 174 located on either side (or top and bottom portions) of the internal support part 171 to each other.

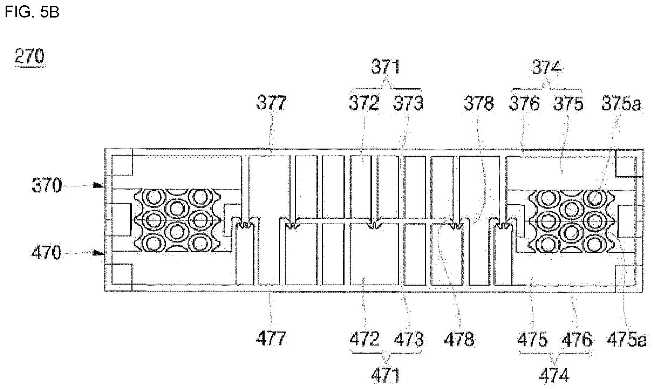

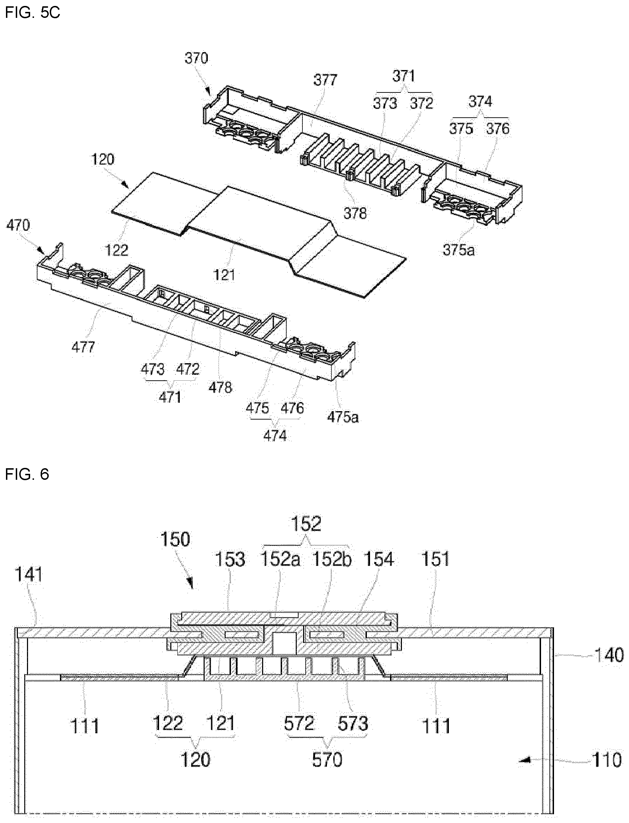

FIG. 5A is a perspective view of a support member 270 according to another embodiment of the present disclosure, FIG. 5B is a plan view of the support member 270 shown in FIG. 5A, and FIG. 5C is an exploded perspective view of the support member 270 and a first current collector plate shown in FIG. 5A.

Referring to FIGS. 5A to 5C, the support member 270 may include a first support member 370 and a second support member 470. For example, the support member 270 may have a form in which the first support member 370 and the second support member 470 are coupled to each other. The first support member 370 and the second support member 470 may be coupled to both sides (e.g., front and rear surfaces) of the first current collector plate 120. For example, the first support member 370 may be inserted from the rear surface of the first current collector plate 120 toward the front side, and the second support member 470 may be inserted from the front surface of the first current collector plate 120 toward the rear surface. In other embodiments, the reverse is possible.

The first support member 370 may include a first internal support part 371 interposed between the terminal connector part 121 and the electrode assembly 110, a first external support part 374 located between the tab connecting part 122 and the first cap assembly 150, and a first connecting part 377 connecting the first internal support part 371 and the first external support part 374 to each other.

The first internal support part 371 may have an internal bottom surface 372 in contact with the electrode assembly 110 and a plurality of partition walls 373 protruding from the internal bottom surface 372 and in contact with the terminal connector part 121. In addition, hooks 378, to be coupled to the second support member 470, may be formed on the partition walls 373. The hooks 378 may be formed on the surface of the partition walls 373 facing the second support member 470.

The first external support part 374 may have an external bottom surface 375 and a sidewall 376 protruding from an edge of the external bottom surface 375. The external bottom surface 375 may have a plurality of holes 375a through which an electrolyte can move.

The first connecting part 377 may connect the first internal support part 371 and the first external support part 374 to each other. The first connecting part 377 may be connected to one end of the first internal support part 371 and may connect the sidewalls 376 of the first external support part 374 located on both sides (e.g., upper and lower portions) of the first internal support part 371 to each other.

The second support member 470 may include a second internal support part 471 interposed between the terminal connector part 121 and the electrode assembly 110, a second external support part 474 located between the tab connecting part 122 and the first cap assembly 150, and a second connecting part 477 connecting the second internal support part 471 and the second external support part 474 to each other.

The second internal support part 471 may have an internal bottom surface 472 in contact with the electrode assembly 110 and a plurality of partition walls 473 protruding from the internal bottom surface 472 and in contact with the terminal connector part 121. In addition, coupling grooves 478, to which the hooks 378 of the first support member 370 are to be coupled, may be formed on the partition walls 473. The coupling grooves 478 may be formed on the surface of the partition walls 473 facing the first support member 370.

The second external support part 474 may have an external bottom surface 475 and a sidewall 476 protruding from an edge of the external bottom surface 475. The external bottom surface 475 may have a plurality of holes 475a through which an electrolyte can move.

The second connecting part 477 may connect the second internal support part 471 and the second external support part 474 to each other. The second connecting part 477 may be connected to one end of the second internal support part 471 and may connect the sidewalls 476 of the second external support part 474 located on both sides (e.g., upper and lower portions) of the second internal support part 471 to each other.

FIG. 6 is a cross-sectional view of a part of a secondary battery including a support member 570 according to another embodiment of the present disclosure.

Referring to FIG. 6, a support member 570 may be interposed between the terminal connector part 121 and the electrode assembly 110. For example, the support member 570 may be in the form of only the internal support part 171 of the support member 170 shown in FIG. 4. The support member 570 may have a bottom surface 572 in contact with the electrode assembly 110 and a plurality of partition walls 573 protruding from the bottom surface 572 and in contact with the terminal connector part 121.

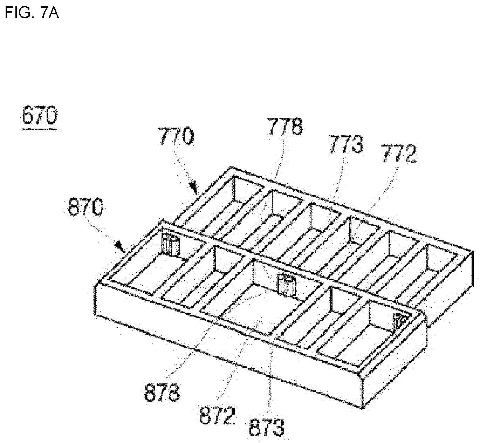

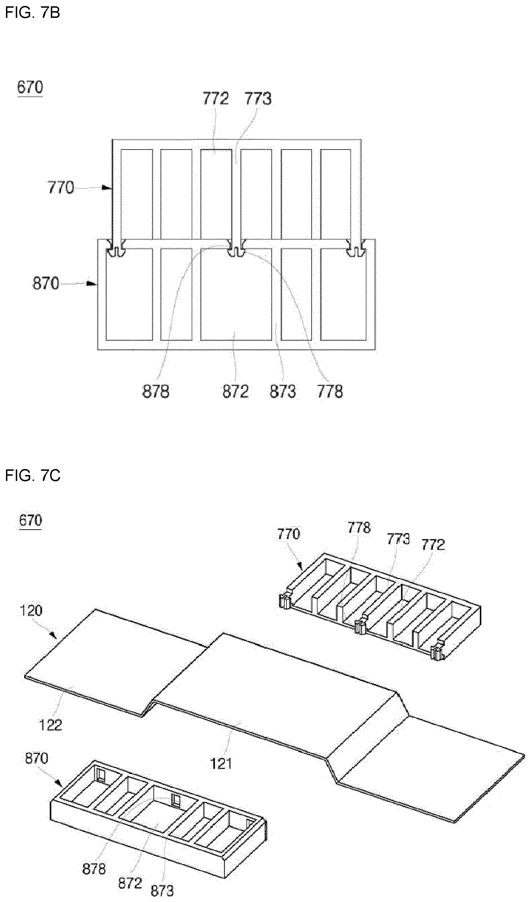

FIG. 7A is a perspective view of a support member 670 according to another embodiment of the present disclosure, FIG. 7B is a plan view of the support member 670 shown in FIG. 7A, and FIG. 7C is an exploded perspective view of the support member 670 and a first current collector plate 120 shown in FIG. 7A.

Referring to FIGS. 7A to 7C, the support member 670 may include a first support member 770 and a second support member 870. For example, the support member 670 may have a form in which the first support member 770 and the second support member 870 are coupled to each other. The first support member 770 and the second support member 870 may be interposed between the terminal connector part 121 and the electrode assembly 110.

The first support member 770 may have a first bottom surface 772 in contact with the electrode assembly 110 and a plurality of first partition walls 773 protruding from the first bottom surface 772 and in contact with the terminal connector part 121. In addition, hooks 778, to be coupled to the second support member 870, may be formed on the first partition walls 773. The hooks 778 may be formed on the surface of the first partition walls 773 facing the second support member 870.

The second support member 870 may have a second bottom surface 872 in contact with the electrode assembly 110 and a plurality of second partition walls 873 protruding from the second bottom surface 872 and in contact with the terminal connector part 121. In addition, coupling grooves 878, to which the hooks 778 of the first support member 770 are to be coupled, may be formed on the second partition walls 873. The coupling grooves 878 may be formed on the surface of the second partition walls 873 facing the first support member 770.

As described above, in a secondary battery according to the present invention, a support member 170, 270, 570, 670 is interposed between the current collector plate 120 and the cap assembly such that the current collector plate 120 and electrode terminals can be easily welded and deformation of the current collector plate 120 for example, during welding, can be prevented.

The foregoing embodiments are only some embodiments for carrying out the present disclosure. In other words, the present disclosure is not limited to the embodiments described herein, and it will be understood by a person skilled in the art that various changes in form and details may be made therein without departing from the spirit and scope of the present disclosure as defined by the following claims and their equivalents.

### Description of symbols

- 100: secondary battery
- 110: electrode assembly
- 111: first current collector tab
- 112: second current collector tab
- 120: first current collector plate
- 120a: first surface
- 120b: second surface
- 121: terminal connector part
- 122: tab connecting part
- 130: second current collector plate
- 140: case
- 141, 142: openings
- 150: first cap assembly
- 151: first cap plate
- 151a: terminal hole
- 151b: electrolyte injection hole
- 152: first electrode terminal
- 152a: protrusion part
- 152b: flange part
- 153: first terminal plate
- 154, 164: first gasket, second gasket
- 160: second cap assembly
- 161: second cap plate
- 162: second electrode terminal
- 163: second terminal plate
- 170, 270, 570, 670: support member
- 171: internal support part
- 172, 372, 472, 572: internal bottom surface
- 173, 373, 473, 573: partition walls
- 174: external support part
- 175, 375, 475: external bottom surface
- 175a, 375a, 475a: plurality of holes
- 176, 376, 476: sidewall
- 177, 377, 477: connecting part
- 370, 770: first support member
- 371: first internal support part
- 374: first external support part
- 378, 778: hooks
- 470, 870: second support member
- 471: second internal support part
- 474: second external support part
- 772: first bottom surface
- 773: first partition walls
- 872: second bottom surface
- 873: second partition walls
- 878: coupling grooves

## Claims

1. A secondary battery (100) comprising:
an electrode assembly (110) comprising a first electrode tab protruding from one side thereof and a second electrode tab protruding from another side thereof;
a case (140) accommodating the electrode assembly (110);
a first cap assembly (150) comprising a first cap plate (151) coupled to one side of the case (140), a first electrode terminal (152) extending through the first cap plate (151), and a gasket (154) between the first cap plate (151) and the first electrode terminal (152);
a first current collector plate (120) comprising a tab connecting part (122) and a terminal connector part (121) protruding from the tab connecting part (122), the tab connecting part (122) being electrically connected to the first electrode tab, the terminal connector part (121) being electrically connected to the first electrode terminal (152); and
a support member (170, 270, 570, 670) between the first cap plate (151) and the first current collector plate (120).

2. The secondary battery (100) of claim 1, wherein the support member (170, 270, 570, 670) is inserted and coupled from a front surface or a rear surface of the first current collector plate (120).

3. The secondary battery (100) of claim 1 or 2, wherein the support member (170, 270) comprises:
an internal support part (171, 371, 471) between the electrode assembly (110) and the terminal connector part (121);
an external support part (174, 374, 474) between the tab connecting part (122) and the first cap plate (151); and
a connecting part (177, 377, 477) connecting the internal support part (171, 371, 471) and the external support part (174, 374, 474).

4. The secondary battery (100) of any of claim 3, wherein the internal support part (171, 371, 471) has an internal bottom surface (172, 372, 472) in contact with the electrode assembly (110) and a plurality of partition walls (173, 373, 473) protruding from the internal bottom surface (172, 372, 472) and in contact with the terminal connector part (121).

5. The secondary battery (100) of claim 3, wherein the external support part (174, 374, 474) has an external bottom surface (175, 375, 475) contacting the tab connecting part (122) and a sidewall (176, 376, 476) protruding from an edge of the external bottom surface (175, 375, 475) and contacting the first cap plate (151).

6. The secondary battery (100) of claim 5, wherein the external bottom surface (175, 375, 475) has a plurality of holes (175a, 375a, 475a) therein.

7. The secondary battery (100) of claim 3, wherein the internal support part (171, 371, 471) and the external support part (174, 374, 474) are spaced apart from each other.

8. The secondary battery (100) of claims 1 to 7, wherein the support member (270) comprises:
a first support member (370) inserted from a rear surface of the first current collector plate (120); and
a second support member (470) inserted from a front surface of the first current collector plate (120) and coupled to the first support member (370).

9. The secondary battery (100) of claim 8, wherein the first support member (370) comprises:
a first internal support part (371) between the electrode assembly (110) and the terminal connector part (121);
a first external support part (374) between the tab connecting part (122) and the first cap plate (151); and
a first connecting part (377) connecting the first internal support part (371) and the first external support part (374), and
wherein the second support member (470) comprises:
a second internal support part (471) between the electrode assembly (110) and the terminal connector part (121);
a second external support part (474) between the tab connecting part (122) and the first cap plate (151); and
a second connecting part (477) connecting the second internal support part (471) and the second external support part (474).

10. The secondary battery (100) of claim 9, wherein the first internal support part (371) comprises a hook (378), and
wherein the second internal support part (471) has a coupling groove (478) configured to receive the hook (378).

11. The secondary battery (100) of claims 1 to 10, wherein the support member (170, 270, 570, 670) is between the electrode assembly (110) and the terminal connector part (121), and
wherein the support member (170, 270, 570, 670) has a bottom surface (172, 372, 572, 772, 872) in contact with the electrode assembly (110) and a plurality of partition walls (173, 373, 573, 773, 873) protruding from the bottom surface (172, 372, 572, 772, 872) and in contact with the terminal connector part (121).

12. The secondary battery of claim 11, wherein the support member (270, 670) comprises:
a first support member (370, 770) inserted from a rear surface of the first current collector plate (120); and
a second support member (470, 870) inserted from a front surface of the first current collector plate (120) and coupled to the first support member (370).

13. The secondary battery (100) of claim 12, wherein the first support member (770) has a first bottom surface (772) in contact with the electrode assembly (110) and a plurality of first partition walls (773) protruding from the first bottom surface (772) and in contact with the terminal connector part (121), and
wherein the second support member (870) has a second bottom surface (872) in contact with the electrode assembly (110) and a plurality of second partition walls (873) protruding from the second t bottom surface (872) and in contact with the terminal connector part (121).

14. The secondary battery (100) of claim 13, wherein the first partition walls (773) comprise hooks (778), and
wherein the second partition walls (873) have coupling grooves (878) configured to receive the hooks (778).

15. The secondary battery (100) of claims 1 to 14, further comprising:
a second cap assembly (160) comprising a second cap plate (161) coupled to another side of the case (140), a second electrode terminal (162) passing through the second cap plate (161), and a gasket (164) between the second cap plate (161) and the second electrode terminal (162);
a second current collector plate (130) comprising a tab connecting part (122) and a terminal connector part (121) protruding from the tab connecting part (122), the tab connecting part (122) being electrically connected to the second electrode tab, the terminal connector part (121) being electrically connected to the second electrode terminal (162); and
a support member (170) between the second cap plate (161) and the second current collector plate (130).
